# EUROPEAN PATENT SPECIFICATION

(11) **EP 2 549 857 B1**
(45) Date of publication and mention of the grant of the patent: **24.12.2014**
(21) Application number: 11712053.5
(22) Date of filing: 25.03.2011
(51) Int. Cl.: A01K 41/00

(54) **INCUBATOR AND METHOD FOR INCUBATING EGGS**
INKUBATOR UND VERFAHREN ZUR INKUBATION VON EIERN
INCUBATEUR ET PROCÉDÉ PERMETTANT D'INCUBER DES UFS

(30) Priority: 25.03.2010 NL 2004459
(43) Date of publication of application: 30.01.2013
(73) Proprietor: Pas Reform BV, 7038 CH Zeddam (NL)
(72) Inventor: BOERJAN, Maria Leonie, NL-6703 CN Wageningen (NL); MEIJER, Joris Hans, NL-7531 GH Enschede (NL); DE VREEDE, Wilhelmus Ludovicus, NL-6922 AP Duiven (NL); RIETBERG, Johannes Henricus Maria, NL-7132 AB Lichtenvoorde (NL)
(74) Representative: De Vries & Metman
(86) International application number: PCT/NL2011/050206
(87) International publication number: WO 2011/119032

(56) References cited:
- BE-A3- 1 011 911
- US-A- 5 418 131
- US-A- 5 657 720
- US-A1- 2007 245 973
- US-B1- 6 789 507

## Description

The present invention relates to an incubator for incubating eggs, in particular eggs of poultry, and to a method of incubating eggs.

Artificial incubation of eggs is carried out in incubators with in a closed chamber in which the eggs are placed, e.g., in a tray. The temperature and humidity in the chamber are controlled in order to maintain the eggs at conditions which give incubation periods similar to the incubation periods associated with natural incubation.

During incubation three development stages can be distinguishes. In the first phase, the embryo develops from a single cell to an almost fully formed chick. This stage takes about half of the total incubation time. In a second phase, the organs and tissues of the chicks grow to increase in size in readiness for hatching. In a third phase - the actual hatching phase - a series of developments enable the embryo to survive outside the egg shell. First it brakes into the air space within the egg shell (internal pipping), allowing the lungs to start functioning. Subsequently, the chick breaks the shell (external piping) and emerges as an independent chick.

EP 2 105 048 A discloses a method for incubating fertilized poultry eggs at a varying temperature regime, where the temperature is raised in the third stage. Such thermal stimulation of growth requires accurate climate control for all eggs present during the three incubation phases. However, heat generation by the eggs is different per individual egg.

Not only temperature but also relative humidity is an important parameter during incubation. According to WO 2008/141846, chick quality and hatching percentages can be optimized by effective weight loss control by controlling temperature and vapour pressure. Hatchability and chick quality are improved when the eggs lose 10 - 15 % of their initial weight by diffusion of water vapour through pores in the egg shell. This weight loss process can be controlled by controlling the relative humidity of the air within the incubator.

A further parameter influencing incubation processes is the CO₂ / O₂ content ratio. Particularly during the second phase the need for oxygen increases. This requires the supply of fresh air, e.g., by ventilation. Ventilation also assists in the removal of CO₂ and in controlling humidity.
During the incubation process fresh air is introduced into the incubator to adjust moisture content and CO₂/O₂ ratio. During the first phase, the embryo produces little metabolic heat or CO₂, so air exchange can be low. At the inlet, the fresh air typically has a temperature and relative humidity which is different from the average temperature and relative humidity inside the incubator.

In the incubators interior obstacles may isolate sections of the incubator from the air flow. The trolleys or trays holding the eggs may guide the air flow around the mass of eggs instead of letting the air flow pass evenly between the eggs, thus contributing to an uneven distribution of temperature. Also the used temperature control elements within the incubator can contribute to local temperature variations. These local variations in climate parameters complicate effective climate control.

In present day hatchery industry there is a trend towards large capacity incubators, which may for instance contain as much as 100.000 eggs or more. Such large numbers further complicate climate control.

WO 2005/013678 discloses a system for incubator climate control responsive to measurements of bioresponse variables in the micro-environment of a number of individual eggs. However, the number of eggs in an incubator can be very large. To obtain statistically significant measurement results, a large number of eggs should be monitored.

It is an object of the present invention to provide an incubator and an incubation method enabling improving effectiveness and accuracy of climate control in an incubator, so as to obtain an improved and uniform chick quality.

The object of the invention is achieved with a method of incubating poultry eggs in an incubator comprising one or more incubator sections,
- wherein an air flow is generated within each incubator section
- and the CO₂ content and/or the air humidity are measured in air homogenized by the air flow,
- wherein fresh air is supplied to adjust the measured air humidity to a set point value provided that the measured CO₂ content is below a predefined upper limit,
- which fresh air is mixed into air already present in the incubator before the mixed hair is guided along the eggs.

When the measured CO₂ content exceeds the predefined upper limit, the ventilation of the incubator can be increased, regardless of the temperature or air humidity, until the measured CO₂ content is below the upper limit again.

This way, the level or Ventilation is controlled by time dependent embryo metabolism of all eggs. The relative humidity in the incubator controls the rate of water evaporation and thereby weight of the eggs. The accurate control of relative humidity is essential for optimum hatchabilities (number of chicks) and chick quality. If weight loss of the eggs is too little because of a high relative humidity the risk of open navels, and thus the risk of infection (omphalitis) of day old chicks is increasing. If weight loss is too high because of a low relative humidity the risk for dehydration of embryos and thus day old chicks is high which results in higher rates of mortality at the farm. However, it has been found that above a certain CO₂ limit embryo development is optimized by Ventilation regardless of air humidity, until the measured CO₂ content is below the upper limit again.

With the method according to the present invention the climate in the incubator, in particular temperature, humidity and CO₂ level, can be controlled to support embryonic development in an optimal way in all incubated eggs. Natural evaporation of water from the eggs can be kept unaffected, while the incubator meets the time-varying needs of the growing embryo in its different stages of development. Over-ventilation can effectively be avoided. The use of humidifiers can be avoided or minimized. Cold spots in the incubator resulting from excessive ventilation or resulting from the use of humidifiers can be avoided or at least be reduced. No measurements in microenvironments of individual eggs are needed anymore. All eggs are incubated under homogenized and uniform climate conditions, in particular vapour pressure and CO₂ content.

Due to the homogenized climate and air pomposition, the level of ventilation can be optimized. With the system according to the present invention, the climate in the incubator can effectively be controled independent from the climate - including temperature, air humidity and CO₂ levels - outside the incubator.

CO₂ content and relative humidity are closely correlated parameters: if the one becomes too high, the other one well be close to its upper limit as well. If the CO₂ content exceeds its upper limit while the relative humidity is not particularly high, a humidifier may be used to compensate for vapour loss when fresh air is introduced into the incubator to lower the CO₂ content.

Good results have been found when the relative humidity is at most 55 %, e.g., between 50 - 55 %, or between 0,0025 - 0,01 kg moisture per kg air. Is was found that embryonic development is optimized if the relative humidity is controlled such that the weight loss of the eggs is about 0,5 - 0,7 % of the initial egg weight per day.

Effective homogenization of the air in the incubators and as uniform climate can be obtained by creating vortices and swirls in the air flow, e.g., by using a vortex generator such as one or more fans having blades shaped to maximize.generation of vortices.

Optionally, incubators can comprise a number of incubator sections, where trolleys can be positioned with trays holding the eggs. These sections may be provided with independent temperature control systems. The incubator can for example have two opposite rows of incubator sections. The homogenizing air flow can be arranged per section. For instance, the air flow can be guided around a section before being drawn into it, e.g., by a vortex generator or air pump, such as a radial air pump. This way, the air is thoroughly homogenized before it flows over and between the eggs in the section.

To achieve a uniform climate in the micro-environment; around the individual eggs, the eggs can be held in a tray formed by a grid spacing the eggs. This way the air can flow through the grid uniformly along each side of the eggs and the microenvironments of adjacent eggs do not interfere with each other.

The method according to the present invention can effectively be realized with an incubator for incubating fertilized poultry eggs, the incubator comprising one for more sections with an air inlet, an air flow generator configured to homogenize fresh air from the air inlet and air already present in the incubator, wherein the air islets comprise a control unit responsive to sensors for measuring the air humidity and the CO₂ content in the incubator. The control units of the air inlets can for example comprise an interface for the input of a set point value for the air humidity and/or an upper limit of the CO₂ content. This way the operator can have full control over the incubation process and tailor it, e.g., to the type of poultry eggs.

Each section of the incubator can have a separate temperature control system. Such a temperature control system can for instance include one or more coolers and/or one or more heaters.

Very effective homogenization of the incubator air can be obtained if at least part of the sections comprise one or more vortex generators with fan blades at least partly having a curved cross section with a convex side facing a wall of the incubator section. The air ducts can be provided at the convex side of the blades extending in the longitudinal direction of the blades, which air ducts are operatively connected to the air inlet.

Such air ducts on the blades work as a radial pump. Fresh air can be pumped into the incubator via the air ducts to create an air flow. Due to the convex shape of the blades vortices are generated in the air flow, which intensify mixing of the fresh air with the air present in the incubator.

The air inlet can for instance be located at the ceiling of the incubator. The air can flow via a vertical channel to the vortex generators hub, where it is guided to the air ducts of the vortex generator blades.

The incubator sections can be provided with partitions for guiding the air flow from the blades of the vortex generator to the opposite side of the incubator room where the air flow is drawn to the vortex generator. This way, the fresh air flows over the present eggs only after intense mixing with present air and after thorough homogenization. The blades of the vortex generator draw the created air flow vortices over the eggs. As a result, a very uniform climate for all eggs can be obtained.

The curved cross section of the blades can for example have a trailing edge which is substantially vertical and a leading edge which is substantially horizontal when the blade is in a horizontal position. In this context, the leading edge is the longitudinal blade edge passing first when the blade rotates, while the trailing edge is the longitudinal edge which passes least. The curved section can have a curvature with a radius gradually decreasing from the tail edge to the front edge. It has been found that with such a blade geometry high concentrations of vortices and swirls can be realized in the wake of the blades.

Optionally, the incubator section can be provided with one or more heating and/or cooling elements and/or humidifiers and/or dehumidifiers and/or one or more oxygen supplies for further climate control.

The incubator will generally comprise a number of sections, e.g., six section in two rows of three, but if so desired, the incubator can have only a single section.

The incubator can for instance be used for chicken eggs, duck eggs, turkey eggs or eggs of any other type of poultry.

The present invention will be elucidated with reference to the figures wherein:
- Figure 1:: shows schematically in plan view an incubator according to the present invention;
- Figure 2:: shows a cross section of the incubator along line A-A in Figure 1;
- Figure 3:: shows a cross section of the incubator along line B-B in Figure 1;
- Figure 4:: shows in perspective view a vortex generator of the incubator of Figure 1;
- Figure 5:: shows a side view of the vortex generator of Figure 4;
- Figure 6:: shows a front view of the vortex generator of Figure 4.

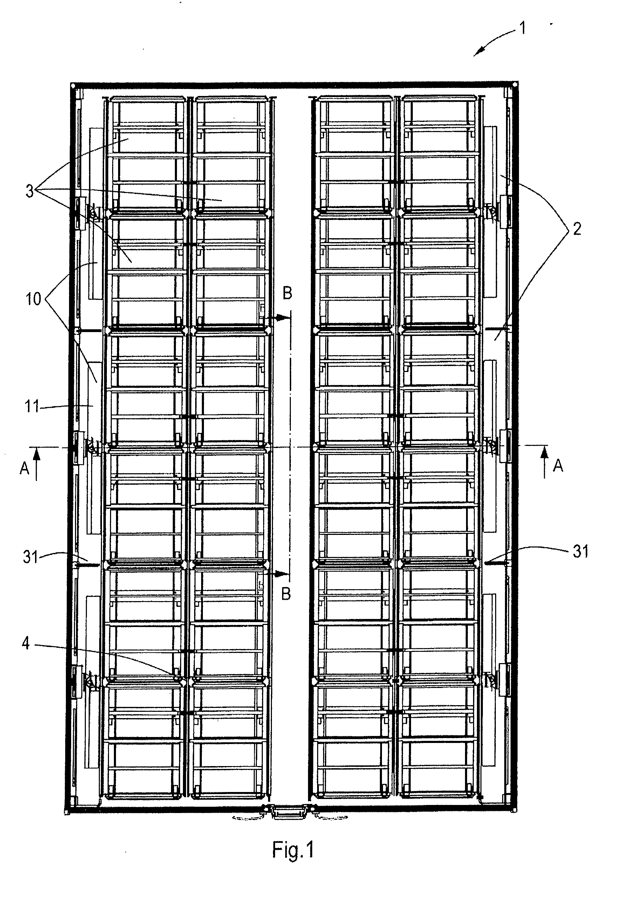

Figure 1 shows in pan view an incubator 1 according to the present invention. The incubator 1 as shown in the drawing comprises six sections 2 with separate climate control. Incubators having fewer sections, e.g., a single section, or having more than six sections can also be used, if so desired. In each section four trolleys 3 can be placed. However, the sections can also be configured to contain less that four or more than four trolleys, if so desired.

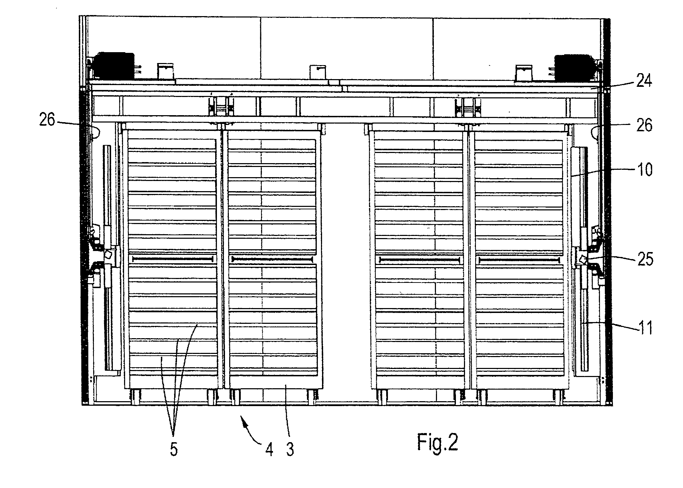

Each section 1 comprises a central egg zone 4 where the trolleys 3 are placed. The trolleys 3 comprise a number of trays 5 for holding poultry eggs (see Figure 2). The trays 5 can be tilted between a +45° position, a horizontal position and a -45° position. During incubation, the trays 5 are regularly tilted between these positions to imitate the natural breeding process wherein a hen regularly turns her eggs.

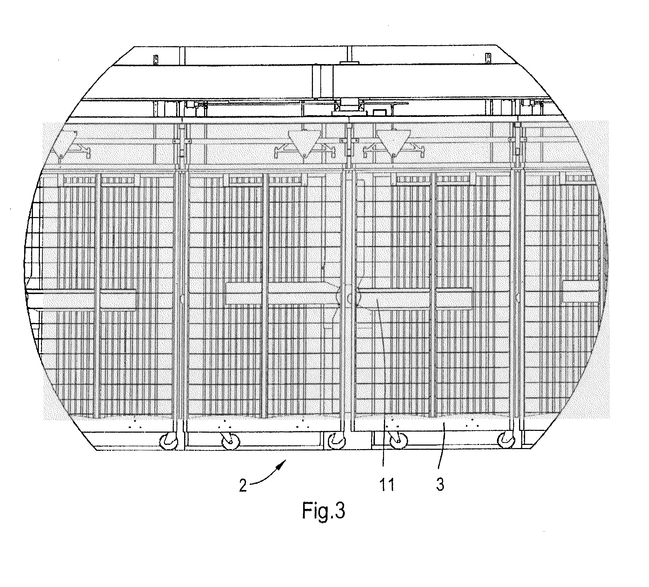

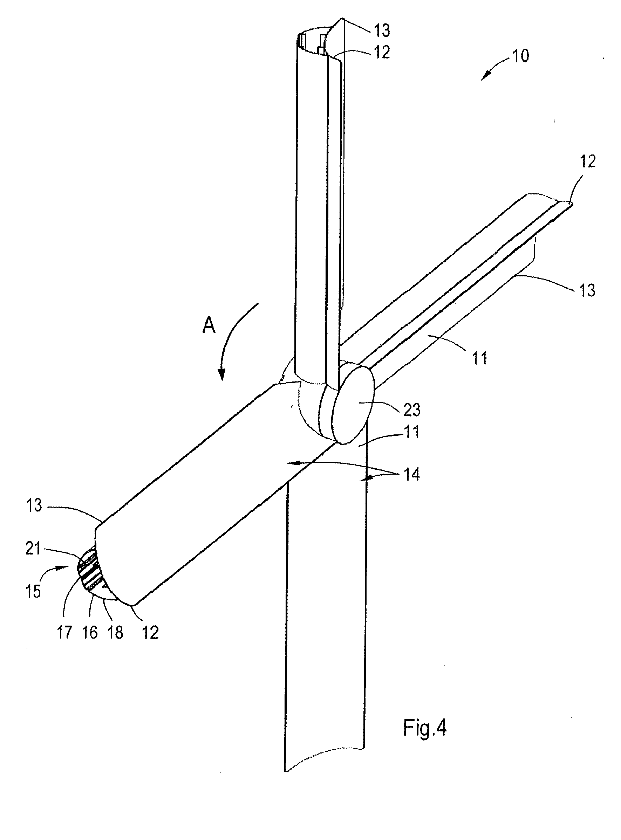

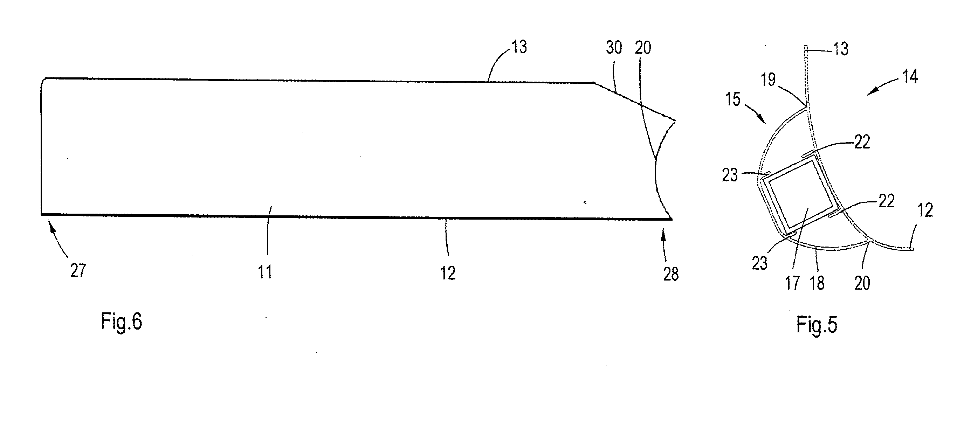

The sections 2 comprise a vortex generator 10 with a number of blades 11 (in this case four blades), which is shown in more detail in Figures 4, 5 and 6. The blades 11 show a curved cross section with a leading edge 12 being substantially horizontal and a trailing edge 13 being substantially vertical when the blade 11 is in a horizontal position. In operation the blades 11 rotate in the direction from trailing edge 13 to the leading edge 12, as indicated by the arrow A in Figure 4. The radius of the curvature of the blade 11 gradually decreases from the trailing edge 13 to the leading edge 12. The concave side 14 of the blade 11 is directed to the egg zone 4 of the section 1. The convex side 15 is provided with air ducts 16 extending in the longitudinal direction of the blade 11. The air ducts 16 comprise a channel 17 with a rectangular or a square cross section. The channel 17 is capped by a C-shaped cover 18 with longitudinal edges 19, 20 attached to the blade 11 (see Figure 5). The C-shaped cover 18 and the blade 11 enclose a space 21 where the square channel 17 fits in. As shown in Figure 3, the C-shaped cover 18 and the blade 11 each comprise two protruding ribs 22, 23 within the space 21 extending in longitudinal direction of the blades 11 to hold the channel 17. The blades 11 are carried by a hub 25 which is rotatably driven by a computer-controlled electromotor (not shown).

As shown in Figure 2 each section 2 comprises an air inlet channel 26 leading from an air inlet in the ceiling 24 to the hub 25. The hub 25 comprises an interior air channel (not shown) in open connection at one side with the vertical inlet channel 26 and with its other side in open connection with each one of the air ducts 16.

As shown in Figure 6, the blades 11 have a first terminal end 27 with a side substantially under right angles with the longitudinal direction of the blade 11, and a second terminal end 28 shaped with a circle segment cut-out 29 to fit onto the hub 25. Near the cut-out 29, the trailing edge 13 has a section 30 which is bevelled under an acute angle.

Due to the shape of the blades, the vortex generator 10 draws air from the egg zone towards itself while it creates vortices in the air flow.

The CO₂ content and the relative air humidity of the homogenize air are constantly or regularly measured by sensors (not shown), which can for example be located in a zone between the sections.

If the CO₂ content exceeds an upper limit, ventilation of the incubator is increased, regardless of the air humidity or temperature in the incubator. Under such circumstances, these parameters can be controlled by heaters or coopers and by (de)humidifiers within the incubator.

If the CO₂ content is below the upper limit, Ventilation is used to adjust the air humidity within the incubator to bring it to a predefined set point value.

A user interface (not shown) enables an operator to input a desired set point value for the air humidity and an upper limit for the CO₂ content. Ventilation is realized by transporting fresh pair from the air inlet via the hub 25 to the air ducts. The sections 2 of the incubator 1 are divided by short baffles 31. When the vortex generator 10 is activated, air is drawn into the incubator 1 via the vertical inlet channel 26, the hub 25 and the air ducts 16, which eject the air radially towards the baffles 31 and to the floor and ceiling respectively. Then baffles 31 as well as the floor and the ceiling deflect the air flow by about 90 degrees towards the opposite section 2. Where the air flows from two opposite sections 2 run into each other, the air flows are again deflected and drawn towards the vortex generator 10 by the locally subatmospheric pressure created by the vortex generator 10. Due to the shape and configuration of the blades 11, vortices are created in the air flow as it passes the egg zone 4 and swirls towards the vortex generator 10.

## Claims

1. Method of incubating poultry eggs in an incubator (1) comprising one or more incubator sections (2)
- wherein an air flow is generated within each incubator section
- and the CO₂ content and the air humidity are measured in air homogenized by the air flow,
- wherein fresh air is supplied to adjust the measured air humidity to a set point value provided that the measured CO₂ content is below a predefined upper limit,
- wherein, if the CO₂ content exceeds the upper limit, ventilation is increased independent from the measured relative humidity and temperature in the incubator, until the CO₂ content is below the upper limit;
- which fresh air is mixed into air already present in the incubator before the mixed air is guided along the eggs.

2. A method according to claim 1, wherein vortices are created in the air flow.

3. A method according to any one of the preceding claims, wherein the air flow is guided around a section (2) before being drawn into it.

4. A method according to any one of the preceding claims, wherein the fresh air is supplied via a radial pump.

5. A method according to any one of the preceding claims, wherein the eggs are held in trays (5) formed by a grid spacing the eggs.

6. Incubator (1) for incubating fertilized poultry eggs, the incubator comprising one or more sections (2) with an air inlet (26), an air flow generator (10) configured to mix and homogenize fresh air from the air inlet and air already present in the incubator, wherein the air inlets comprise a control unit responsive to sensors for measuring the air humidity and the CO₂ content of the homogenized mixed air in the incubator, wherein the control unit is configured to supply fresh air to adjust the measured air humidity to a set point value provided that the measured CO₂ content is below a predefined upper limit, and, if the CO₂ content exceeds the upper limit, to increase ventilation independent from the measured relative humidity and temperature in the incubator, until the CO₂ content is below the upper limit.

7. Incubator according to claim 6, wherein the control units of the air inlets comprise an interface for the input of the set point value for the air humidity and/or the upper limit of the CO₂ content.

8. Incubator according to claim 7 or 8, wherein each section comprises a separate temperature control system, comprising one or more coolers and one or more heaters.

9. Incubator according to claim 6, 7, or 8, wherein the air flow generators comprise one or more vortex generators (10) with blades (11) at least partly having a curved cross section with a convex side facing a wall of the incubator section (2), wherein air ducts (16) are provided at the convex side of the blades extending in the longitudinal direction of the blades, which air ducts are operatively connected to the air inlet.

10. Incubator according to claim 9, wherein the vortex generator (10) comprises a hub (25) embedding channels connecting the air inlet to the air ducts (16) of the blades.

11. Incubator according to any one of the preceding claims, wherein the incubator section (2) is provided with partitions (31) guiding the air flow.

12. Incubator according to any one of the preceding claims, wherein the sections (2) of the incubator (1) are positioned in such a way that the air flow in a section is at least partly guided by the air flow in one or more adjacent sections.

## Patentansprüche

1. Verfahren zur Inkubation von Geflügeleiern in einem Inkubator (1), der einen oder mehrere Inkubatorabschnitte (2) aufweist,
- wobei in jedem Inkubatorabschnitt ein Luftstrom erzeugt wird,
- und der CO₂-Gehalt und die Luftfeuchtigkeit in Luft gemessen werden, die von dem Luftstrom homogenisiert werden,
- wobei Frischluft zugeführt wird, um die gemessene Luftfeuchtigkeit auf einen Sollwert einzustellen, vorausgesetzt, der gemessene CO₂-Gehalt ist unterhalb einer vorgegebenen oberen Grenze,
- wobei für den Fall, dass der CO₂-Gehalt die obere Grenze überschreitet, Ventilation ungeachtet der gemessenen relativen Luftfeuchtigkeit und Temperatur in dem Inkubator verstärkt wird, bis der CO₂-Gehalt unterhalb der oberen Grenze ist;
- wobei die Frischluft in im Inkubator bereits vorhandene Luft eingemischt wird, bevor die Mischluft an den Eiern entlang geführt wird.

2. Verfahren nach Anspruch 1, wobei in dem Luftstrom Wirbel erzeugt werden.

3. Verfahren nach einem der vorstehenden Ansprüche, wobei der Luftstrom um einen Abschnitt (2) herumgeleitet wird, bevor er in diesen hineingezogen wird.

4. Verfahren nach einem der vorstehenden Ansprüche, wobei die Frischluft über eine Radialpumpe zugeführt wird.

5. Verfahren nach einem der vorstehenden Ansprüche, wobei die Eier voneinander beabstandet in aus Gitter gebildeten Körben (5) gehalten werden.

6. Inkubator (1) zur Inkubation von befruchteten Geflügeleiern, wobei der Inkubator einen oder mehrere Abschnitte (2) mit einem Lufteinlass (26) und einem Luftstromgenerator (10) aufweist, der konfiguriert ist, um Frischluft aus dem Lufteinlass und Luft, die bereits im Inkubator vorhanden ist, zu mischen und zu homogenisieren, wobei die Lufteinlässe eine Steuereinheit aufweisen, die auf Sensoren zum Messen der Luftfeuchtigkeit und des CO₂-Gehalts der homogenisierten Mischluft im Inkubator anspricht, wobei die Steuereinheit konfiguriert ist, um Frischluft zuzuführen, um die gemessene Luftfeuchtigkeit auf einen Sollwert einzustellen, vorausgesetzt, der gemessene CO₂-Gehalt ist unterhalb einer vorgegebenen oberen Grenze, und für den Fall, dass der CO₂-Gehalt die obere Grenze überschreitet, Ventilation ungeachtet der gemessenen relativen Luftfeuchtigkeit und Temperatur im Inkubator zu verstärken, bis der CO₂-Gehalt unterhalb der oberen Grenze ist.

7. Inkubator nach Anspruch 6, wobei die Steuereinheiten der Lufteinlässe eine Schnittstelle zur Eingabe des Sollwerts für die Luftfeuchtigkeit und/oder der oberen Grenze des CO₂-Gehalts aufweisen.

8. Inkubator nach Anspruch 6 oder 7, wobei jeder Abschnitt ein separates Temperatursteuersystem mit einer oder mehreren Kühleinrichtungen und/oder einer oder mehreren Heizeinrichtungen aufweist.

9. Inkubator nach Anspruch 6, 7 oder 8, wobei die Luftstromgeneratoren einen oder mehrere Wirbelgeneratoren (10) mit Blättern (11) aufweisen, die mindestens teilweise einen gekrümmten Querschnitt haben, wobei eine konvexe Seite zur Wand des Inkubatorabschnitts (2) gerichtet, wobei an der konvexen Seite der Blätter Luftkanäle (16) bereitgestellt sind, die sich in Längsrichtung der Blätter erstrecken, wobei die Luftkanäle mit dem Lufteinlass operativ verbunden sind.

10. Inkubator nach Anspruch 9, wobei der Wirbelgenerator (10) eine Nabe (25) mit darin eingebetteten Kanälen aufweist, die den Lufteinlass mit den Luftkanälen (16) der Blätter verbinden.

11. Inkubator nach einem der vorstehenden Ansprüche, wobei der Inkubatorabschnitt (2) mit Scheidewänden (31) versehen ist, die den Luftstrom leiten.

12. Inkubator nach einem der vorstehenden Ansprüche, wobei die Abschnitte (2) des Inkubators (1) derart angeordnet sind, dass der Luftstrom in einem Abschnitt mindestens teilweise von dem Luftstrom in einem oder mehreren benachbarten Abschnitten geleitet wird.

## Revendications

1. Procédé de couvaison d'oeufs de volaille dans une couveuse (1) comprenant une ou plusieurs sections de couveuse (2)
- dans lequel un courant d'air est généré à l'intérieur de chaque section de couveuse
- et la teneur en CO₂ et l'humidité de l'air sont mesurées dans l'air homogénéisé par le courant d'air,
- dans lequel de l'air frais est fourni pour ajuster l'humidité mesurée de l'air à une valeur de consigne, à condition que la teneur en CO₂ mesurée se situe en dessous d'une limite supérieure prédéfinie,
- dans lequel, si la teneur en CO₂ excède la limite supérieure, la ventilation est augmentée, indépendamment de l'humidité relative mesurée et de la température dans la couveuse, jusqu'à ce que la teneur en CO₂ et soit en dessous de la limite supérieure ;
- lequel air frais étant mélangé avec l'air déjà présent dans la couveuse avant que l'air mélangé ne soit guidé le long des oeufs.

2. Un procédé selon la revendication 1, dans lequel des tourbillons sont créés dans le courant d'air.

3. Un procédé selon l'une ou l'autre des revendications précédentes, dans lequel le courant d'air est guidé autour d'une section (2) avant d'y être introduit.

4. Un procédé selon l'une ou l'autre des revendications précédentes, dans lequel l'air frais est fourni au moyen d'une pompe radiale.

5. Un procédé selon l'une ou l'autre des revendications précédentes, dans lequel les oeufs sont portés par des plateaux (5) formés par une grille espaçant les oeufs les uns des autres.

6. Couveuse (1) pour couver des oeufs de volaille fertilisés, cette couveuse comprenant une ou plusieurs sections (2) ayant une entrée d'air (26), un générateur de courant d'air (10) configuré pour mélanger et homogénéiser l'air frais provenant de l'entrée d'air avec l'air déjà présent dans la couveuse, dans lequel les entrées d'air comprennent une unité de commande répondant à des détecteurs pour mesurer l'humidité de l'air et la teneur en CO₂ de l'air mélangé et homogénéisé de la couveuse, dans lequel l'unité de commande est configurée pour fournir de l'air frais pour ajuster l'humidité mesurée de l'air à une valeur de consigne, à condition que la teneur en CO₂ mesurée se situe en dessous d'une limite prédéfinie, et, si la teneur en CO₂ excède la limite supérieure, pour augmenter la ventilation indépendamment de l'humidité relative mesurée et de la température dans la couveuse, jusqu'à ce que la teneur en CO₂ soit en dessous de la limite supérieure.

7. Couveuse selon la revendication 6, dans laquelle les unités de commande des entrées d'air comprennent une interface pour la saisie de la valeur de consigne pour l'humidité de l'air et/ou la limite supérieure de la teneur en CO₂.

8. Couveuse selon la revendication 7 ou 8, dans laquelle chaque section comprend un système de contrôle de la température séparé comportant un ou plusieurs refroidisseurs et un ou plusieurs éléments chauffants.

9. Couveuse selon la revendication 6, 7 ou 8, dans lequel les générateurs de courant d'air comprennent un ou plusieurs générateurs de tourbillons (10) avec des pales (11) ayant au moins en partie une section transversale incurvée avec un côté convexe faisant face à une paroi de la section de couveuse (2), dans lequel des conduits d'air (16) sont prévus du côté convexe des pales en s'étendant dans la direction longitudinale des pales, lesquels conduits d'air sont opérationnellement reliés à l'entrée d'air.

10. Couveuse selon la revendication 9, dans laquelle le générateur de tourbillons (10) comprend un moyeu (25) dans lequel sont enterrés des canaux reliant l'entrée d'air aux conduits d'air (16) des pales.

11. Couveuse selon l'une ou l'autre des revendications précédentes, dans laquelle la section de couveuse (2) est pourvue de parois séparatrices (31) guidant le courant d'air.

12. Couveuse selon l'une ou l'autre des revendications précédentes, dans laquelle les sections (2) de la couveuse (1) sont positionnées de telle manière que le courant d'air dans une section soit au moins partiellement guidé par le courant d'air dans une ou plusieurs sections adjacentes.
